# EUROPEAN PATENT APPLICATION

(11) **EP 2 175 369 A2**
(43) Date of publication of application: **14.04.2010**
(21) Application number: 09010920.8
(22) Date of filing: 26.08.2009
(51) Int. Cl.: G06F 9/46

(54) **Concurrent collaborative processes for data management and retrieval**

(30) Priority: 10.10.2008 US 249246
(71) Applicant: SAP AG, 69190 Walldorf (DE)
(72) Inventor: Bornhoevd, Christof, 69190 Walldorf (DE); Bajaj, Sumeet, 69190 Walldorf (DE)
(74) Representative: Lehmann, Judith Christina

(57) **Abstract**

In one embodiment the present invention includes a plurality of processes for storing data. The processes may include identifiers for specifying other processes representing other resources. In one embodiment, the processes store link types for specifying a relationship type between the resource represented by the process and other resources represented by other processes. Processes may represent data elements and the links may represent relationships between the data. Queries may be conducted across the data in parallel by sending messages to the processes. In one embodiment, the processes represent RDF subjects and RDF objects, and the links represent RDF predicates. Queries for RDF data satisfying predefined criteria or relationships can be performed in parallel by executing processes at the same time on different threads on one or more CPUs.

## Description

### Background

The present invention relates to data management, and in particular, to concurrent collaborative processes for data management and retrieval.

Unless otherwise indicated herein, the approaches described in this section are not prior art to the claims in this application and are not admitted to be prior art by inclusion in this section.

Improvements in semiconductor process technology and computer system architecture are resulting in increasingly powerful hardware platforms. For instance, central processing units ("CPUs") are moving from single core to multi-core and many-core implementations with as many as 16 core CPUs or more that may provide 128 hardware threads. In terms of memory, on-chip memory subsystems (e.g., L1 and L2 caches) are increasing into the range of 10-50MB or more and affordable main-memory in the 128GB-0.5TB range is on the foreseeable. For network bandwidth 1-100 gigabit has become not uncommon. As a consequence, it is expected that completely new and significantly more powerful hardware architectures will become available at a reasonable cost point.

Until recently application developers were enjoying a continuous increase in processor speeds without having to change their code. However, future programs will not be able to automatically benefit from an increasing number of processor cores. Rather, programmers and software architects need new software architectures and programming models to tap into the newly available computing resources. If programmers don't want to put the burden of writing parallel programs on the average application programmer, a new runtime environment and higher-level programming model is needed that will, on the one hand, allow the developer to write sequential programs as before, and that, on the other hand, automatically executes these programs in a parallel way by exploiting the available number of CPUs/cores and that automatically scales in terms of throughput with the number of CPUs/cores. What is needed is a new programming paradigm that effectively uses the new computing power to make possible the management and retrieval of the vast amounts of business-relevant data available to us within an enterprise and from the Internet (i.e. external information sources).

One example where a new approach is needed is in the area of managing and accessing Resourse Description Framework ("RDF") data. The RDF data model has become a prominent representation model not only for Web data annotations or the description of Web services where RDF is used as a representation model for semantic metadata, but also as a flexible data model for the representation of actual data in a way that supports semantic reasoning on top of it.

The RDF has originally been designed to express metadata about web resources, but is now used as a general way of representing and exchanging (RDF-XML) semi-structured information. In particular, RDF is (together with OWL) one of the basic data formats of the Semantic Web and thus is also getting popular in the knowledge management domain. RDF is based on the concept that statements about resources can be made in the form of triples consisting of a subject, predicate and object. The subject and the object are always resources, whereas the predicate of such a statement can be a literal. This simple concept, with almost no further constraints, offers an extremely flexible way of modelling information in the form of directed graphs formed by subject and object nodes linked by predicates - and hence heavily depends on what conventions individual applications use to encode/decode RDF data.

One problem with traditional techniques for storing data is that large amounts of data must be processed sequentially. For example, for data stored in tables, a query must examine each element or row of data sequentially. As another example, RDF triples are generally stored in databases such as triple stores and queried using a dedicated query language such as SPARQL. A triple store is a purpose-built database for the storage and retrieval of Resource Description Framework (RDF) metadata. Much like a relational database, one stores information in a triple store and retrieves it via a query language. Unlike a relational database, a triple store is optimized for the storage and retrieval of many short statements called triples, in the form of subject-predicate-object, like "Bob is 35" or "Bob knows Fred". However, in an RDF query, as in other forms of traditional queries, the triples are examined one at a time. Accordingly, data management and access are extremely computationally intensive and time consuming. For example, in some relational database management systems data is partitioned to execute a query on the different partitions in parallel. However, data partitioning is complex and the best way to partition data in general depends on the particular query at hand.

Thus, there is a need for improved data management and access techniques. The present invention solves these and other problems by providing concurrent collaborative processes for data management and retrieval.

### Summary

Embodiments of the present invention improve data management and access using multiple processes. In one embodiment the present invention includes a computer-implemented method comprising generating a plurality of processes, wherein each process represents a resource and each process stores state information comprising a first identifier for specifying the process in which the first identifier is stored, one or more second identifiers for specifying other processes representing other resources, and one or more link types for specifying a relationship type between the resource represented by the process in which the link types are stored and another resource represented by another process specified by one of the second identifiers, wherein each second identifier has at least one associated link type, receiving a query message in one or more of the processes, simultaneously, in each of the plurality of processes, processing the query message, and in accordance therewith, accessing state information, and returning the accessed state information in response to the query.

The processes may run concurrently. Each process may be an independent software program executable on a different thread. In one embodiment, each process is executed on different threads on a plurality of central processing units.

In one embodiment, the link types are unidirectional, specifying a directed relationship between a first resource represented by a first process and a second resource represented by a second process.

In one embodiment, the resources comprise RDF subjects and RDF objects, and the link types are RDF predicates.

In one embodiment, the second identifiers and the link types comprise tuples such that each second identifier has one associated link type.

In one embodiment, each process includes a plurality of logic statements for processing different messages.

In one embodiment, the messages are processed independently in each process.

In one embodiment, messages are communicated between processes across a common software layer.

In one embodiment, each process continuously loops through a plurality of message processing logic statements, and wherein when a received message matches one of said message processing logic statements, the process executes corresponding message logic specific to a received message.

In one embodiment, the accessed state information comprises one or more of the second identifiers and link types.

In one embodiment, the method further comprises forwarding a message to processes specified by the one or more accessed second identifiers.

In one embodiment, the message is forwarded to a process specified by an accessed identifier if a link type associated with the accessed identifier has a first value, and the message is not forwarded to the process specified by an accessed identifier if a link type associated with the accessed identifier has a second value.

In one embodiment, the accessed state information includes the stored second identifiers, and the method further comprises storing second identifiers in a common memory location, sending a first message to other processes specified by the second identifiers, and receiving an acknowledgement from each of said other processes. For each process receiving the first message, if the receiving process includes stored identifiers specifying other processes, then the receiving process stores the identifiers in the common memory location, generates one or more messages to other processes specified by the stored identifiers of the receiving process, and sends an acknowledgement to the process generating the first message after receiving an acknowledgement in response to the one or more messages, and if the receiving process does not include stored identifiers specifying other processes, then the process responds to the first message with an acknowledgement.

In another embodiment, the present invention includes a computer-implemented system comprising one or more processors and a plurality of processes, wherein each process represents a resource and each process stores state information comprising a first identifier for the process in which the first identifier is stored, one or more second identifiers for specifying other processes representing other resources, and one or more link types for specifying a relationship type between the resource represented by the process in which the link types are stored and another resource represented by another process specified by one of the second identifications, wherein each second identifier has at least one associated link type, and wherein a query message is received in one or more of the processes, each process simultaneously processes the query message, and in accordance therewith, accesses state information, and one or more of the processes returns the accessed state information in response to the query.

In one embodiment, each process is an independent concurrently executable software program executed on different threads on a plurality of central processing units.

In one embodiment, the query message is processed in parallel by a plurality of said processes.

In one embodiment, the accessed state information comprises one or more of the second identifiers and link types.

In one embodiment, a message is forwarded to processes specified by the one or more accessed second identifiers.

In one embodiment, the message is forwarded to a process specified by an accessed identifier if a link type associated with the accessed identifier has a first value, and the message is not forwarded to the process specified by an accessed identifier if a link type associated with the accessed identifier has a second value.

In one embodiment, the accessed state information includes the stored second identifiers, and wherein the second identifiers are stored in a common memory location, a first message is sent to other processes specified by the second identifiers, and an acknowledgement is received from each of said other processes, and wherein for each process receiving the first message, if the receiving process includes stored identifiers specifying other processes, then the receiving process stores the identifiers in the common memory location, generates one or more messages to other processes specified by the stored identifiers of the receiving process, and sends an acknowledgement to the process generating the first message after receiving an acknowledgement in response to the one or more messages, and if the receiving process does not include stored identifiers specifying other processes, then the process responds to the first message with an acknowledgement.

In another embodiment, the present invention includes computer readable medium embodying a computer program for performing methods and techniques described herein. The computer readable medium may include instructions for programming a computer system or multiple computer systems with one or more processors to perform the methods and techniques described herein. In one embodiment, the computer readable medium includes a program for performing a method, said method comprising generating a plurality of processes, wherein each process represents a resource and each process stores state information comprising a first identifier for the process in which the first identifier is stored, one or more second identifiers for specifying other processes representing other resources, and one or more link types for specifying a relationship type between the resource represented by the process in which the link types are stored and another resource represented by another process specified by one of the second identifications, wherein each second identifier has at least one associated link type, receiving a query message in one or more of the processes, simultaneously, in each of the plurality of processes, processing the query message, and in accordance therewith, accessing state information, and returning the accessed state information in response to the query, wherein the identifiers are unique, and wherein each process is an independent concurrently executable software program executed on different threads on a plurality of central processing units, and wherein the link types are unidirectional, specifying a directed relationship between a first resource represented by a first process and a second resource represented by a second process, and wherein the query message is processed in parallel by a plurality of said processes.

The following detailed description and accompanying drawings provide a better understanding of the nature and advantages of the present invention.

### Brief Description of the Drawings

In the drawings,
Figure 1 illustrates concurrent collaborative processes according to one embodiment of the present invention.
Figure 2 illustrates a software architecture for concurrent collaborative processes according to one embodiment of the present invention.
Figure 3 illustrates querying processes according to one embodiment of the present invention.
Figure 4 illustrates relationships between processes according to one embodiment of the present invention.
Figure 5A-B illustrate an example of concurrent collaborative processes according to one embodiment of the present invention.
Figure 5C illustrates another example of concurrent collaborative processes according to one embodiment of the present invention.
Figure 6 illustrates a hardware system for implementing processes according to one embodiment of the present invention.

### Detailed Description

Described herein are processes for managing and accessing data. In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

Embodiments of the present invention include a novel and innovative approach on how to manage data (e.g., RDF data) through a set of concurrent collaborative processes to exploit increasingly available computing capabilities available through modern hardware architectures. The approach allows the system to scale in terms of request throughput and to improve response times of data intensive queries with increasing numbers of CPU cores and available main memory without requiring any changes to the system architecture or software program.

In this new approach, data is no longer treated as passive entities stored in databases (e.g., triple stores for RDF) or other storage mechanisms. Instead, data are represented by concurrently running processes in the system. Information about relationships between data elements is maintained locally by the processes. Data elements may be referred to as resources. Data is distributed amongst a plurality of processes and query evaluation is done collectively by these processes. In one embodiment, query messages are received and evaluated simultaneously by each process. In another embodiment, the processes evaluate queries by passing messages to each other and performing operations on their local state information. Accordingly, rather than sequentially examining data in a relational database (e.g., reading rows of a table one by one), embodiments of the present invention include simultaneously processing the query message and accessing state information in each of the plurality of processes, and returning a result in potentially far less time depending on the number of available hardware threads, CPUs/cores, complexity of query, and data volume. The data represented by each process may be persisted and maintained by each individual process to allow recovery from system level errors like power failures or main memory corruptions. Different storage mechanisms like a local file system or a dedicated store can be used for the persistent storage, for example.

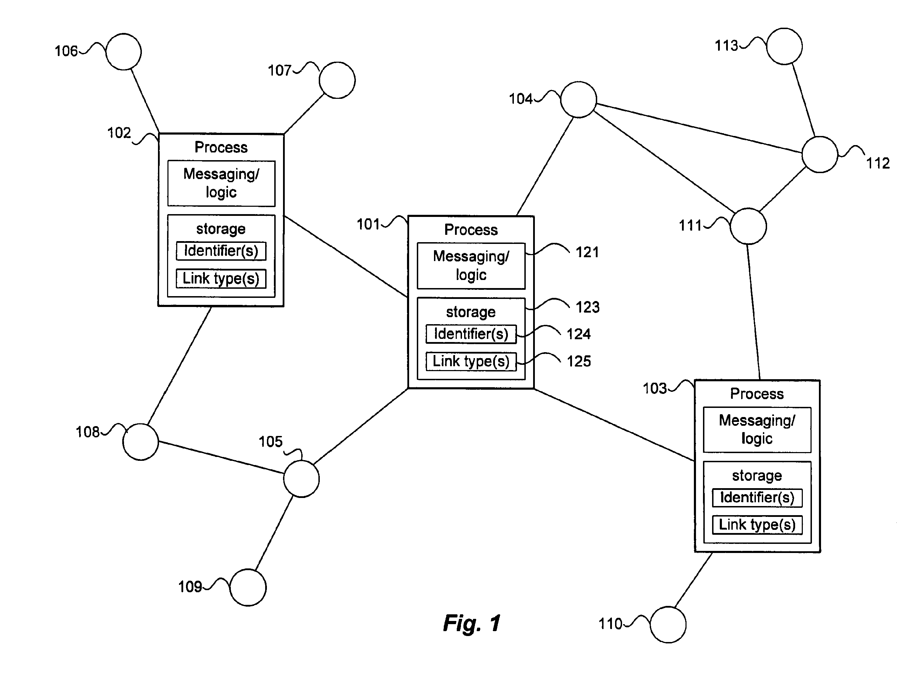

Figure 1 illustrates concurrent collaborative processes according to one embodiment of the present invention. Processes 101-113 may be used to store data and relationships between the data. For example, each process may represent a resource and each process may store information (state information) that may be accessed by a query. Accordingly, a query message may retrieve information from a plurality of processes simultaneously. As used herein, it is to be understood that simultaneously is used in the software sense rather than in a strict exact sense. In the example shown in Figure 1, each process includes the same structure. For instance, process 101 may be an independent software program (or instance) from processes 102, 103, and the other processes. Each process may include messaging/logic 121 for receiving and sending messages and executing operations. For example, a query message may be received, and each process may access locally stored data in response to the query and send the data if certain conditions are satisfied.

Features and advantages of the present invention include capturing and storing relationships between data. In this example, each process represents a resource and each process includes storage 123 for storing state information comprising identifiers 124 or link types 125, or both. Each process may store an identifier for itself (i.e., an identifier for specifying the process in which the identifier is stored). In particular, process 101 may store an identifier such as a number (e.g., 101) or characters, for example, which may be used to represent process 101 to other processes or software components. Additionally, each process may store identifiers for specifying other processes representing other resources. Further, each process may store one or more link types for specifying a relationship type between the resource represented by the process in which the link types are stored and another resource represented by another process specified by one of the identifiers. For example, process 101 may store an identifier for specifying processes 102, 103, 104, and 105. The identifiers may be the numbers {102, 103, 104, 105} or character strings (e.g., names) associated with the resources represented by each process. By storing these identifiers in local storage 123, the resource represented by process 101 thereby has a relationship to the resource represented by processes 102-105. Furthermore, the type of relationship may be determined from link types. For instance, process 101 may store link types associated with each of the identifiers. Accordingly, the relationship between data represented by or stored in process 101 and data for other processes may be specified. As a specific example, if process 101 represents a particular person and process 102 represents another specific person, then the identifiers establish a relationship between the two people, and the link type specifies the type of relationship (e.g., Fred (process 101) is the father of John (process 102)). Accordingly, if a query message searches for a specific relationship (e.g., find John's father), then all of the processes will analyze the query simultaneously and one or more of the processes (process 101 - Fred) will return a result (e.g., process 101 may send its identifier indicating that it represents Fred, who is John's father).

As illustrated in Figure 1, any number of processes may be generated depending on the amount of data. In one embodiment, the processes run concurrently. As mentioned above, each process may be independent of the other processes. For example, the processes may be independent software programs (or instances of programs) that execute on different threads. Furthermore, each process may be executed on different threads on a plurality of different central processing units ("CPUs").

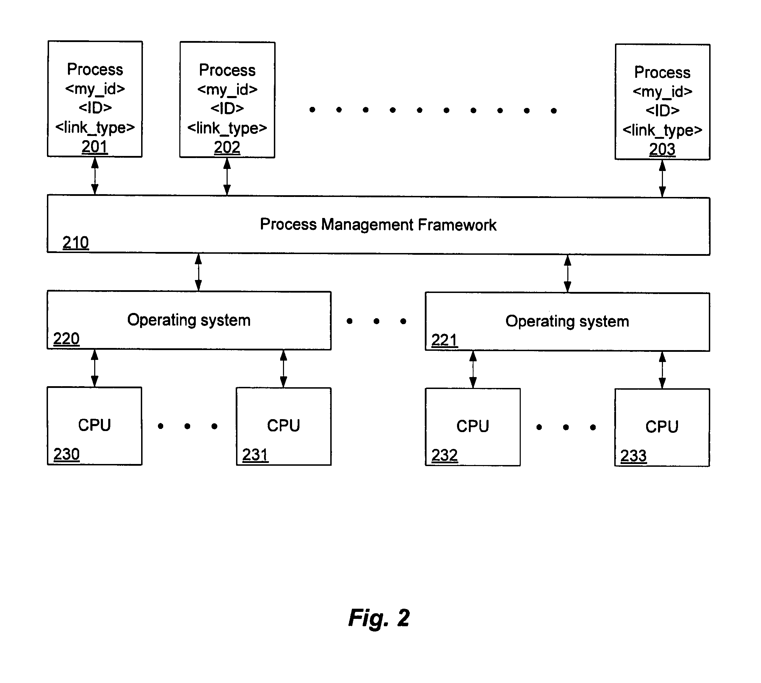

Figure 2 illustrates a software architecture for concurrent collaborative processes according to one embodiment of the present invention. As mentioned above, a plurality of processes for representing data may include their own identifiers ("<my_id>"), one or more identifiers of related data represented by other processes ("<ID>"), and link types ("link_type"). This example shows processes 201, 202, and many more processes up to 203. The processes are independently executable components that may receive messages or send messages, or both, through a common software layer 210. Software layer 210 may form a process management framework for sending messages to a particular process using a unique ID corresponding to and stored in each process, for example. Software layer 210 may be implanted as one or more software components that are executable on one or more computer systems. In this example, a process management framework sends and receives messages from each process 201-203. The process management framework, in turn, interacts with one or more operating systems on different computer systems. Here, framework 210 interacts with operating system 220 on one computer system and operating system 221 on another computer system. Example interactions may include receiving instructions for starting a process, query messages, local memory management, or persistent storage of the data in a disk drive, flash memory, or other form of non-volatile memory, for example. It is to be understood the framework 210 and processes 201-203 may run on multiple computer systems such as servers across a network, for example. In this example, the processes are executable on multiple CPUs 230-233. Each process may be assigned to a different thread, and each thread may be assigned to a different CPU so the processes may be executed in parallel.

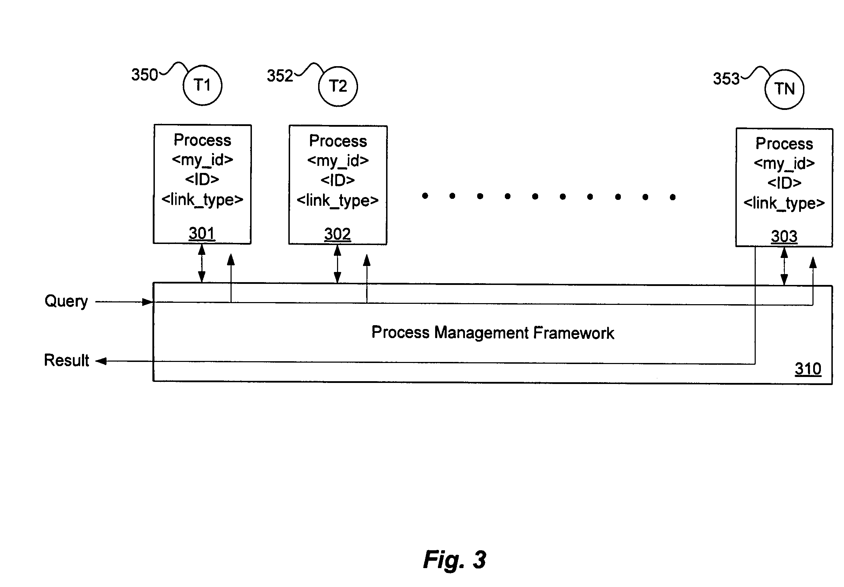

Figure 3 illustrates querying processes according to one embodiment of the present invention. In this example, a query message is received in the process management framework 310. The query may be sent to each process 301-303. Each process 301-303 is executable on a different corresponding thread 350-353, respectively. Therefore, each process may receive and process the query message simultaneously. In this example, a query message is received by framework 310. Query messages are sent to each process from the framework. Each process analyzes the query message simultaneously. In particular, each process executing on a different thread may receive the query, access locally stored data (e.g., IDs and link types), and determine if the query constraints are satisfied. Here, process 303 may satisfy the query and return a result by sending a message back to framework 310. Accordingly, queries for data and the associated access and analysis of the data may be processed in parallel by each process rather than sequentially analyzing the contents of tables of data one row at a time.

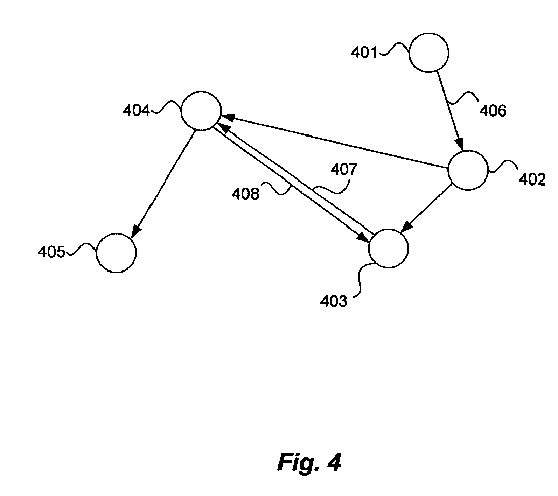

Figure 4 illustrates relationships between processes according to one embodiment of the present invention. In this example, each process stores its own identifier, one or more identifiers of other processes, and link types. Here, the link types are unidirectional, specifying a directed relationship between a first resource represented by a first process and a second resource represented by a second process. For example, one process 401 may represent a person "Tom," and another process 402 may represent another person "Frank." Process 401 may store the identifier for process 402 to establish a relationship between the data elements. Additionally, process 401 may store a unidirectional link type 406 specifying a "friend of" type of relationship. Accordingly, the identifier and link type stored in process 401 indicate that "Frank" is a "friend of" "Tom." Process 402, representing "Frank" may in turn store identifiers corresponding to processes 404 and 403 and link types for specifying the relationships. If process 404 represents "Jim" and the link type associated with the identifier for process 404 specifies a "brother of" relationship, then this information establishes that "Jim" is the "brother of" "Frank." Similarly, if process 403 represents "John" and the link type associated with the identifier for process 403 specifies a "relative of" relationship, then this information establishes that "John" is a "relative of" "Frank." In this example, process 403 stores the identifier for process 404 and an associated link type 407, and process 404 stores the identifier for process 403 and an associated link type 408. This information with two unidirectional link types establishes a bidirectional relationship between processes 403 and 404. Using the example above, process 404 may store a link type of "son of," which indicates that the person represented by process 403 ("John") is the "son of" the person represented by process 404 ("Jim"). Similarly, process 403 may store a link type of "father of," which indicates that the person represented by process 404 ("Jim") is the "father of" the person represented by process 403 ("John").

From the above description it can be seen that querying based on relationships can be implemented across all data elements quickly and efficiently. For example, a query message may request: return all relatives of Frank (or "who are Frank's relatives"). Each process may receive the query and each process may access locally stored identifiers and link types. In this example query, "relatives" may include "relative of", "brother of", "father of", "son of", etc... Therefore, process 402 will access locally stored identifiers, determine that the query is directed at itself (since process 402 represents Frank), and then return all identifiers having an associated link type that is in the category "relatives." In this example, the identifiers for process 403 and 404 are returned since "relative" is defined to include "brother of" and "relative of".

### Example

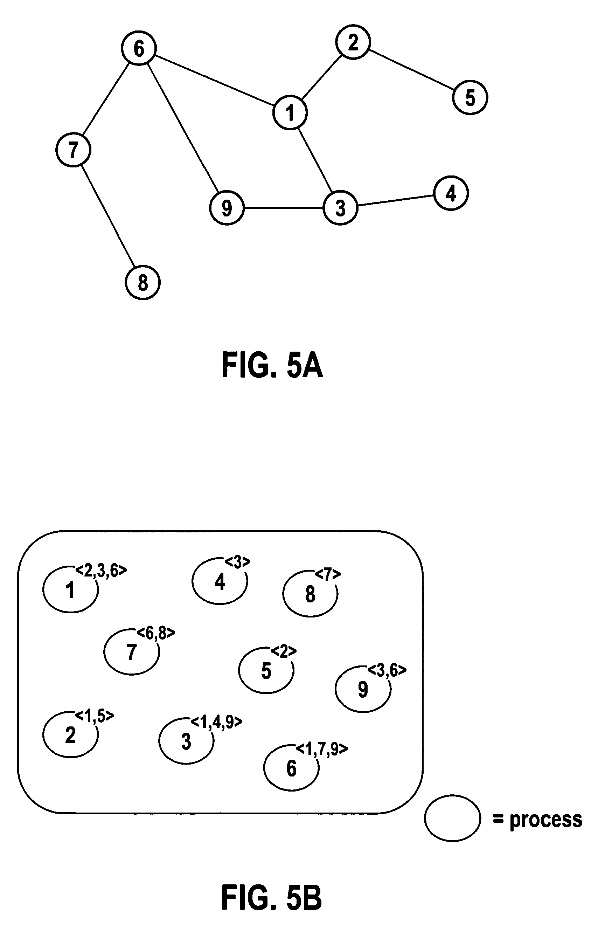

Figures 5A-B illustrate an example of concurrent collaborative processes according to one embodiment of the present invention. In this example, Resource Description Framework (RDF) resources and related data is managed through a set of concurrent collaborative processes to exploit increasingly available computing capabilities available through modern hardware architectures. In this example, RDF is the underlying data model for the description of the embodiment presented here, however, other embodiments of the present invention can be used with other data models, for example, where data is represented in the form of directed graphs. RDF is used to describe electronic resources and the semantic properties of the resources. RDF resources may include "subjects" and "objects", which are related by a "predicate. In this example, a unique RDF resource is a unique subject that is related to an object by a unique predicate. Here, RDF subjects and objects are no longer treated as passive entities stored in databases (triple stores) or other storage mechanisms. Instead, subjects or objects, or both, are represented by concurrently running processes in the system. Information about RDF predicates is maintained locally by the processes in the form of link types as describe above. Each process only maintains a small subset of the predicates which concern the subject or object it is representing. RDF subjects and RDF objects are referred to more generally as RDF resources. The processes evaluate queries by receiving messages from a common software layer and/or by passing messages to each other through the layer and performing operations on their local state information.

In this example, there is no single store where all RDF data (triples) are stored. Instead the data is distributed amongst the various processes and query evaluation is done collectively by these processes. The RDF data represented by each process can be persisted and maintained by each individual process to allow recovery from system level errors like power failures or main memory corruptions. Different storage mechanisms like a local file system or a dedicated RDF store can be used for the persistent storage.

As mentioned above, each RDF resource is represented by a running process in the system. The process may be identified by the same name as the RDF resource. Links between RDF resources are maintained as state information within the processes (e.g., as "link_types" associated with the identifiers stored in the process).

Figure 5A illustrates an example RDF graph. Here, the resources are named using numbers, but any arbitrary names could be used (e.g., arbitrary strings may be used to name the resources). For each of the resources <1,2,3,4,5,6,7,8,9> a process is created in the system, and each process represents a different resource. The resource represented by each process is stored in the process as an identifier (e.g., numbers, strings, etc...). Here, the processes are also named <1,2,3,4,5,6,7,8,9> such that the process named 1 is a virtual representation of the resource named 1 and so on. Accordingly, process 1 stores an identifier "1" indicating that the process represents the resource named "1". In the RDF graph in Figure 5A the links between the RDF resources are shown by edges between the nodes. In the system these links are represented by information maintained within the local process state. To illustrate this better the following table shows the identifier and link type state information maintained at each process for the RDF graph in Figure 5A:

| **Process Name** | **State Information** **<identifier, link type>** |
|---|---|
| 1 | <2, link type> |
| | <3, link type> |
| | <6, link type> |
| 2 | <1, link type> |
| | <5, link type> |
| 3 | <1, link type> |
| | <4, link type> |
| | <9, link type> |
| 4 | <3, link type> |
| 5 | <2, link type> |
| 6 | <1, link type> |
| | <7, link type> |
| | <9, link type> |
| 7 | <6, link type> |
| | <8, link type > |
| 8 | <7, link type> |
| 9 | <3, link type> |
| | <6, link type> |

In this example, RDF queries are evaluated as the collective action of the individual processes in the system. There is no need for a single process to loop over the entire resource data set to get the results. Processes communicate by passing messages to each other (e.g., through a common software layer). All processes can be addressed by their names. In some instances, query execution occurs by processes passing subsets of their state information as messages to each other. The outcome of this information exchange between the processes results in the query being evaluated (i.e. in the result data of the given query). As described above, the processes may include a plurality of logic statements for processing different messages. The example processes here may perform an action only in response to the receipt of a message. Each process may continuously loops through a plurality of message processing logic statements until a message is received. When a received message matches one of the message processing logic statements, the process may execute corresponding message logic specific to a received message. The result of the action may include another message sent to either the process from which the original message was received, to some other process, or the common software layer, for example.

Query evaluation protocols for example RDF data are exemplary for illustrating additional features and advantages of the present invention. In this example, the vertexes/nodes in Figure 5A represent people and the edges between these vertexes represent a "friend of" relationship. Thus the edge 7-8 means that 7 is a friend of 8. The edges or links in this example are bidirectional, so this means that 8 is also a friend of 7. Similarly, 6 and 9 are friends of each other and so on. It is to be understood that this technique is applicable to arbitrarily large RDF graphs or directed graphs in general. For purposes of explanation, the following notations are used:
{} - a message sent from one process to another.
<> - the local state of a process.
For purpose of this example, these values are listed in Figure 5B.

The processes in the system execute the same algorithm. An example algorithm executed by each process is as follows:

### Start

Wait until a message arrives

```
 If message is of the form {add, Resource} - Resource =
 <id, link_type>
 {
      Add Resource to my state - Store ids and link types
 in local memory
 }
 If message is of the form {remove, Resource} - Delete a
 Resource
 {
      Remove Resource from my state
 }
 If message is of the form {get_linked_resources}
 {
     Send a message containing my state to the process
     from whom this message was received.
 }
 If message is of the form {foaf}
 {
      For each value in my local state
      {
          Send the message {get_linked_resources} to each
          of the processes named by value
      }
          - Gather replies from all processes to whom
            the {get_linked_resources} was sent forming
            a single list
          - For each value in my local state
          {
          Delete the value from the list created in
 previous step
          }
          - Send the contents of the list to the process
            from whom this message was received
 }
 If message is of the form {allf}
 {
      Create a shared memory hash table called by my own
 name 'MyName'
      For each value in my local state
      {
              - Insert the value in the shared table
                 'MyName'
               - Send the message {MyName, allf} to each
                 of the processes named by value
      }
               - Wait for acknowledgements from all
                 processes to whom messages were sent
               - Once all acknowledgements are received
                 create send the contents of the shared
                 table to the process which sent this
                 message
 }
 If message is of the form {SomeName, allf}
 {
      If this query has been evaluated before
          {
               Send an acknowledgement to the process
 that sent this message
          }
          Else
          {
              For each value in my local state
               {
                   If value is present in shared table
 SomeName
                        Do nothing
                   Else
                    {
               - Insert the value in the shared table
               - Send the message {SomeName, allf} to
                 the process named value
                    }
               }
              - Wait for acknowledgement from all
                 processes to whom messages were sent
              - Send an acknowledgement to the process
                 from whom this message was received
          }
 }
 End. 
```

The above protocol implemented by each process can be illustrated using example queries. As a first example, Query 1 may seek to evaluate all friends of resource '1'. First, the query is triggered externally by sending the message {allf} to process '1'. Next, process '1' creates a memory region which is global and can be accessed by all processes. This region may be referred to as 'ets1'. A 'hash table' data structure may be used for this shared region, for example. No synchronization is required on this shared region even though multiple processes update and read it. Process '1' then goes through its local state <2, 3, 6>, adds each of 2, 3 & 6 to ets1 and sends the message {ets1, allf} to the processes '2', '3' and '6' (since '2', '3' and '6' are the ones listed in its local state). Next, process '1' waits until it receives acknowledgements from '2', '3' & '6'.

All other processes execute the next steps when they receive the message {ets1, allf}. Here, only the actions taken by processes '3' and '8' are listed for brevity. First, the local state of process '3' as illustrated in Figure 5B is <1, 4, 9>. For each of the three values in its local state, process '3' checks whether the value is present in ets1 or not. If present then it does nothing. If not present then it adds that value to ets1 and sends the message {ets1, allf} to the process named by value. Process '3' then waits for acknowledgements for all the messages it has sent. Once process '3' receives all the acknowledgements it expects it sends an acknowledgement back to process '1'. Figure 5B illustrates that process '8' will receive a message only from process '7' since '7' is the only friend relationship it has. By this time '7' has already be added to 'ets1' by process '6'. Thus, process '8' only sends an acknowledgement back to process '7'. When process '1' receives all the acknowledgements it is expecting, the query evaluation is complete. The result of the query is contained in the shared memory region 'ets1'. In this case the result is <2,3,4,5,6,7,8,9>. Process '1' may then send the contents of this region to the external entity that triggered the query.

The above protocol implemented by each process can be illustrated using example queries. As a first example, query 2 may evaluate all one-level indirect friends of resource '1'. The one level indirect friends of '1' are <4, 5, 7, 9>. First, the query is triggered externally by sending the message {foaf} to process '1'. Next, process '1' goes through its local state <2, 3, 6> and sends the message {get_linked_resources} to each of the processes '2', '3' and '6'. Each of the processes '2', '3' and '6' then send their local state to process '1'. For example, process '2' sends <1, 5>, '3' sends <1, 4, 9> and '6' sends <1, 7, 9>. Once process '1' receives the states of '2', '3' and '6' it combines these individual replies to form the list <4, 5, 7, 9>. This result is then sent to the triggering entity.

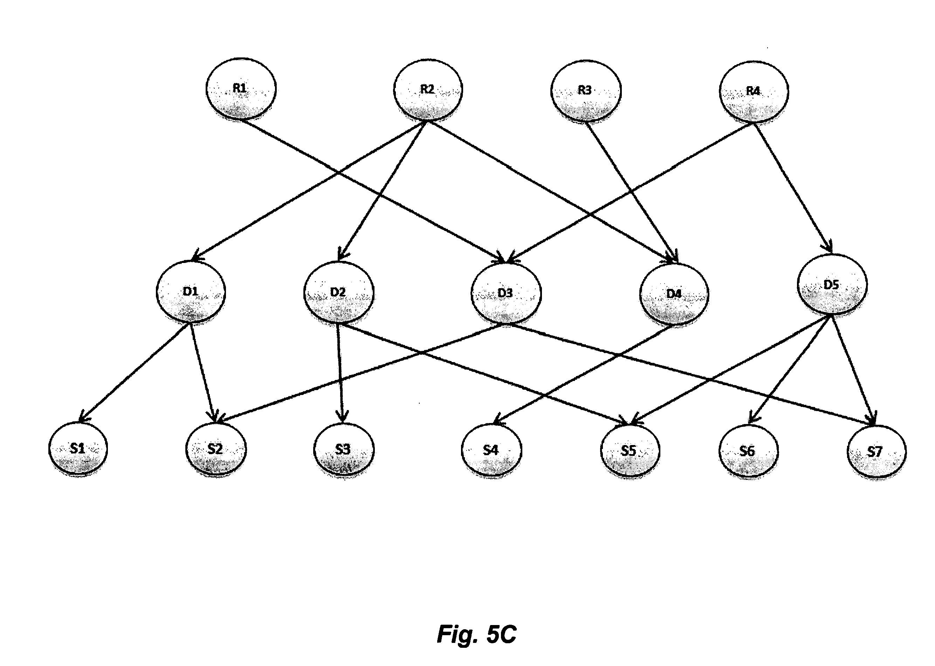

Figures 5C illustrates another example of concurrent collaborative processes according to one embodiment of the present invention. This example relates to the management and access of medical data. In this example the vertexes/nodes labeled R1 to R4 represent drugs, the nodes labeled D1 to D5 represent diseases and the nodes S1 to S7 represent symptoms. Edges between R nodes and D nodes represent a "cures" relationship. Thus, the edge R1-D3 means that drug R1 cures disease D3. Edges between D nodes and S nodes represent a "symptom" relationship. Thus the edge D1-S2 indicates that disease D1 has symptom S2. The links in this example are unidirectional as indicated by arrows in Figure 4. It is to be understood that a simple example is used here for purposes of explanation, but the approach is applicable to arbitrarily large data sets or RDF graphs.

Each of the nodes shown in Figure 5C is represented by a running process in the system. Each node in this example maintains state information including the list of nodes it is linked to (i.e., identifiers) and the description of the type of link (i.e., link type). The following table lists the state maintained by each of the processes:

| Process Name | State Information |
|---|---|
| R1 | <(D3 cures)> |
| R2 | <(D1 cures),(D2 cures),(D4 cures)> |
| R3 | <(D4 cures)> |
| R4 | <(D3 cures), (D5 cures)> |
| D1 | <(S1 symptom),(S2, symptom)> |
| D2 | <(S3 symptom),(S5 symptom)> |
| D3 | <(S2 symptom),(S7 symptom)> |
| D4 | <(S4 symptom)> |
| D5 | <(S5 symptom),(S6 symptom),(S7 symptom)> |

Queries may be evaluated by passing messages to each of the processes and between the processes. For example, a query message may be as follows:
"For a given pair of drugs, find whether they treat diseases that have some symptoms in common"
   To resolve this query, each node may implement the following algorithm:

### Start

Wait until a message arrives

```
 If message is of the form {add, Resource, Link-Type}
 {
      Add Resource, Link-Type to my state
 }
 If message is of the form {remove, Resource}
 {
      Remove Resource from my state
 }
```

```
 If message is of the form {get_linked_resources, Link-
 Type}
 {
 - Send a message containing the list of resources linked
   to me (by given link type) to the process from whom
   this message was received.
 }
```

```
 If message is of the form {get_linked_resources, Link-
 Type, SomeName}
 {
 - Insert the list of resources linked to me (by given
    link type) in the shared table referred to by
    SomeName
  - Send an ack back to the process from whom this
    message was received.
 }
```

```
 If message is of the form {get_symptoms_by_drug,
 SomeName}
 {
```

```
 For each resource linked to me by link type 'cures'
      {
              - Send the message {get_linked_resources,
                 symptom, SomeName} to the process
                 representing the resource
      }
      - Wait for acknowledgements from all processes to
        whom the {get_linked_resources, symptom} message
        was sent
      - Send ack to the process from whom this message
        was received
 }
```

```
 If message is of the form {compare, SomeDrug}
 {
 - T1 = Create a shared memory table called by my own
  name 'MyName'
 - T2 = Create another shared table by the name SomeDrug
 - Send the message {get_symptoms_by_drug, T2} to the
  process representing SomeDrug
 - For each resource linked to me by link type 'cures'
            {
               - Send the message (get_linked_resources,
                 symptom, T1} to the process
                 representing the resource
             }
          - Wait for acknowledgements from all processes
            to whom the messages were sent
          - If any value from T1 is present in T2
               o Return result 'true
                Else
               o Return result 'false'
 }
 End. 
```

The above protocol implemented by each process can be illustrated using example queries. An example query is as follows:
"Find whether R2 & R4 treat diseases that have some symptoms in common"

The query is processed as follows. First, the query is triggered externally by sending the message {compare, R4} to 'R2'. Next, R2 creates two shared tables 'ets1' & 'ets2'. 'R2' then sends the message {get_symptoms_by_drug, ets2} to 'R4'. 'R2' also sends the message {{getlinks, symptom}, ets1} to each of its linked diseases (i.e., 'D1', 'D2', and 'D4'). 'R2' then waits until it receives acknowledgements from 'R4', 'D1', 'D2' & 'D4'. When each of 'D1', 'D2' & 'D4' receive the message {{getlinks, symptom}, ets1}, they find their linked symptoms and store them in ets1. 'D1' stores 'S1' & 'S2'. 'D2' stores 'S3' & 'S5'. 'D4' stores 'S4'. 'D1', 'D2' & 'D4' then send an acknowledgement back to 'R2'. When 'R4' receives the message {get_symptoms_by_drug, ets2} from 'R2' it sends the message {{getlinks, symptom}, ets2} to its linked diseases (i.e. to 'D3'& 'D5'). 'R4' then waits for acknowledgements from 'D3'& 'D5'. When each of 'D3' & 'D5' receive the message {{getlinks, symptom}, ets2}, they find their linked symptoms and store them in ets2. 'D3' stores 'S2' & 'S7'. 'D5' stores 'S5' & 'S6' & 'S7'. 'D3' & 'D5' then send an acknowledgement back to 'R4'. When 'R4' receives acknowledgements from 'D3' & 'D5' it sends an acknowledgement to 'R2'. When 'R2' receives all the acknowledgements it compares the two tables ets1 and ets2. In this case ets1 contains S1, S2, S3, S4, S5, and ets2 contains S2, S5, S6, & S7. Since ets1 and ets2 contain S2 & S5 in common the result returned by 'R2' is 'true'.

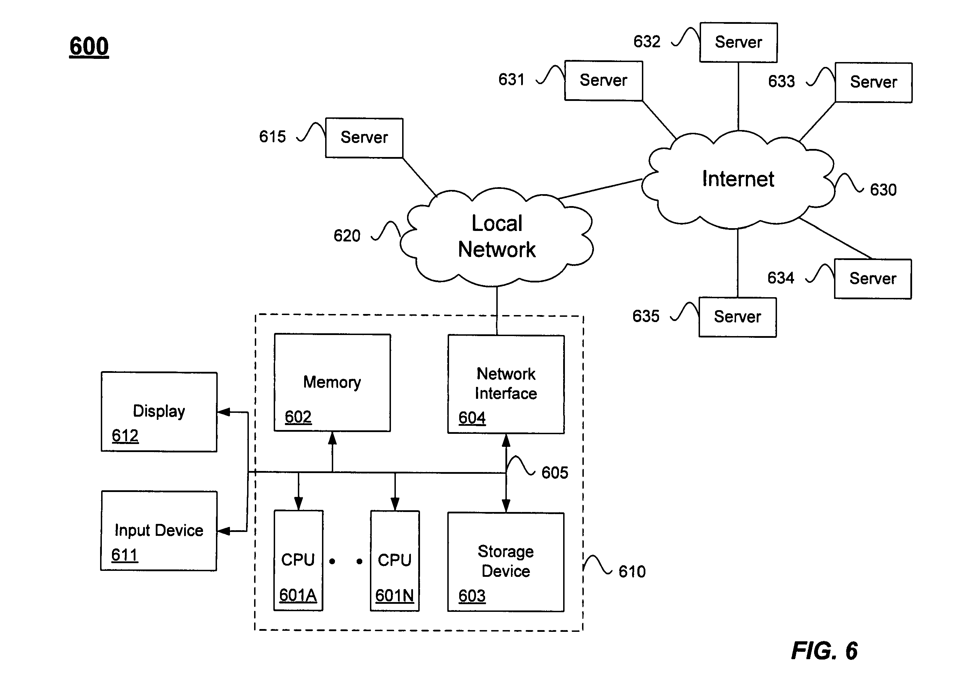

Figure 6 illustrates a simplified diagram of a hardware system for implementing processes according to one embodiment of the present invention. Computer system 610 includes one or more buses 605 or other communication mechanism for communicating information, and one or more central processing units ("CPUs" or "processors") 601A-N coupled with bus 605 for processing information. It is to be understood that actual implementations may vary and include additional multi-CPU components for managing multiple CPUs. Computer system 610 also includes one or more memories 602 coupled to bus 605 for storing information and instructions to be executed by processors 601, including information and instructions for performing the techniques described above, for example. This memory may also be used for storing variables or other intermediate information during execution of instructions to be executed by processors 601. Possible implementations of this memory may be, but are not limited to, random access memory (RAM), read only memory (ROM), or both. A storage device 603 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 603 may include source code, binary code, or software files for performing the techniques or embodying the constructs above, for example.

Computer system 610 may be coupled via bus 605 to a display 612, such as a cathode ray tube (CRT) or liquid crystal display (LCD), for displaying information to a computer user. An input device 611 such as a keyboard and/or mouse is coupled to bus 605 for communicating information and command selections from the user to processor 601. The combination of these components allows the user to communicate with the system. In some systems, bus 605 may be divided into multiple specialized buses.

Computer system 610 also includes a network interface 604 coupled with bus 605. Network interface 604 may provide two-way data communication between computer system 610 and the local network 620. The network interface 604 may be a digital subscriber line (DSL) or a modem to provide data communication connection over a telephone line, for example. Another example of the network interface is a local area network (LAN) card to provide a data communication connection to a compatible LAN. Wireless links using radio frequency communications are another example. In any such implementation, network interface 604 sends and receives electrical, electromagnetic, or optical signals that carry digital data streams representing various types of information.

Computer system 610 can send and receive information, including messages or other interface actions, through the network interface 604 to an Intranet or the Internet 630. In the Internet example, software components or services may reside on multiple different computer systems 610 or servers 631-635 across the network. The processes described above may be implemented on one or more servers, for example. A server 631 may transmit actions or messages from one component, through Internet 630, local network 620, and network interface 604 to a component on computer system 610. Different processes may be implemented on any computer system and send and/or receive information across a network, for example. In one embodiment, the techniques describe above may be implemented by software services on one or more servers 631-635, for example.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

## Claims

1. A computer-implemented method comprising:
generating a plurality of processes, wherein each process represents a resource and each process stores state information comprising a first identifier for specifying the process in which the first identifier is stored, one or more second identifiers for specifying other processes representing other resources, and one or more link types for specifying a relationship type between the resource represented by the process in which the link types are stored and another resource represented by another process specified by one of the second identifiers,
wherein each second identifier has at least one associated link type;
receiving a query message in one or more of the processes;
simultaneously, in each of the plurality of processes, processing the query message, and in accordance therewith, accessing state information; and
returning the accessed state information in response to the query.

2. The method according to claim 1 wherein the processes run concurrently.

3. The method according to any one of the preceding claims wherein messages are communicated between processes across a common software layer.

4. The method according to any one of the preceding claims wherein each process continuously loops through a plurality of message processing logic statements, and wherein when a received message matches one of said message processing logic statements, the process executes corresponding message logic specific to a received message.

5. The method according to any one of the preceding claims wherein the accessed state information comprises one or more of the second identifiers and link types.

6. The method according to claim 5 further comprising forwarding a message to processes specified by the one or more accessed second identifiers.

7. The method according to claim 6 wherein the message is forwarded to a process specified by an accessed identifier if a link type associated with the accessed identifier has a first value, and the message is not forwarded to the process specified by an accessed identifier if a link type associated with the accessed identifier has a second value.

8. The method according to any one of the preceding claims wherein the accessed state information includes the stored second identifiers, the method further comprising:
storing second identifiers in a common memory location;
sending a first message to other processes specified by the second identifiers; and
receiving an acknowledgement from each of said other processes;
wherein for each process receiving the first message, if the receiving process includes stored identifiers specifying other processes, then the receiving process stores the identifiers in the common memory location, generates one or more messages to other processes specified by the stored identifiers of the receiving process, and sends an acknowledgement to the process generating the first message after receiving an acknowledgement in response to the one or more messages, and if the receiving process does not include stored identifiers specifying other processes, then the process responds to the first message with an acknowledgement.

9. A computer-implemented system comprising:
one or more processors; and
a plurality of processes, wherein each process represents a resource and each process stores state information comprising a first identifier for the process in which the first identifier is stored, one or more second identifiers for specifying other processes representing other resources, and one or more link types for specifying a relationship type between the resource represented by the process in which the link types are stored and another resource represented by another process specified by one of the second identifications,
wherein each second identifier has at least one associated link type,
and wherein a query message is received in one or more of the processes;
each process simultaneously processes the query message, and in accordance therewith, accesses state information; and
one or more of the processes returns the accessed state information in response to the query.

10. The computer-implemented system according to claim 9 wherein the link types are unidirectional, specifying a directed relationship between a first resource represented by a first process and a second resource represented by a second process.

11. The computer-implemented system according to any one of claims 9 or 10 wherein the accessed state information comprises one or more of the second identifiers and link types.

12. The computer-implemented system according to claim 11 wherein a message is forwarded to processes specified by the one or more accessed second identifiers.

13. The computer-implemented system according to claim 12 wherein the message is forwarded to a process specified by an accessed identifier if a link type associated with the accessed identifier has a first value, and the message is not forwarded to the process specified by an accessed identifier if a link type associated with the accessed identifier has a second value.

14. The computer-implemented system according to any one of claims 9 to 13 wherein the accessed state information includes the stored second identifiers, and
wherein the second identifiers are stored in a common memory location, a first message is sent to other processes specified by the second identifiers, and and an acknowledgement is received from each of said other processes,
wherein for each process receiving the first message, if the receiving process includes stored identifiers specifying other processes, then the receiving process stores the identifiers in the common memory location, generates one or more messages to other processes specified by the stored identifiers of the receiving process, and sends an acknowledgement to the process generating the first message after receiving an acknowledgement in response to the one or more messages, and if the receiving process does not include stored identifiers specifying other processes, then the process responds to the first message with an acknowledgement.

15. A computer readable medium embodying a computer program for performing a method, said method comprising:
generating a plurality of processes, wherein each process represents a resource and each process stores state information comprising a first identifier for the process in which the first identifier is stored, one or more second identifiers for specifying other processes representing other resources, and one or more link types for specifying a relationship type between the resource represented by the process in which the link types are stored and another resource represented by another process specified by one of the second identifications,
wherein each second identifier has at least one associated link type;
receiving a query message in one or more of the processes;
simultaneously, in each of the plurality of processes, processing the query message, and in accordance therewith, accessing state information; and
returning the accessed state information in response to the query,
wherein the identifiers are unique, and
wherein each process is an independent concurrently executable software program executed on different threads on a plurality of central processing units, and
wherein the link types are unidirectional, specifying a directed relationship between a first resource represented by a first process and a second resource represented by a second process, and
wherein the query message is processed in parallel by a plurality of said processes.
